(19) **Europäisches Patentamt / European Patent Office / Office européen des brevets**

(11) **EP 4 660 277 A1**

(12) **EUROPEAN PATENT APPLICATION**
published in accordance with Art. 153(4) EPC

(43) Date of publication:
**10.12.2025 Bulletin 2025/50**

(21) Application number: **24749906.4**

(22) Date of filing: **12.01.2024**

(51) International Patent Classification (IPC):
**C09K 5/04** $^{(2006.01)}$

(52) Cooperative Patent Classification (CPC):
**C09K 5/04**

(86) International application number:
**PCT/JP2024/000660**

(87) International publication number:
**WO 2024/161951 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.01.2023 JP 2023012254**
**21.04.2023 JP 2023070485**

(71) Applicant: **AGC INC.**
**Chiyoda-ku,**
**Tokyo 1008405 (JP)**

(72) Inventor: **HAYAMIZU, Hiroki**
**Tokyo 100-8405 (JP)**

(74) Representative: **Müller-Boré & Partner**
**Patentanwälte PartG mbB**
**Friedenheimer Brücke 21**
**80639 München (DE)**

(54) **WORKING MEDIUM, HEAT CYCLE SYSTEM COMPOSITION, HEAT CYCLE DEVICE, AND HEAT CYCLE METHOD**

(57) A working medium including (E)-1,3,3,3-tetrafluoropropene, (Z)-1-chloro-2,3,3,3-tetrafluoropropene, and 1,1,1,2,3,3,3-heptafluoropropane, in which a content of the 1,1,1,2,3,3,3-heptafluoropropane is 8.9% by mass or less with respect to a total content of the (E)-1,3,3,3-tetrafluoropropene, the (Z)-1-chloro-2,3,3,3-tetrafluoropropene, and the 1,1,1,2,3,3,3-heptafluoropropane, and a content of the (Z)-1-chloro-2,3,3,3-tetrafluoropropene is 24.5% by mass or less with respect to the total content, as well as any application of the working medium.

EP 4 660 277 A1

**Description**

Technical Field

The present disclosure relates to a working medium, a composition for a heat cycle system, a heat cycle apparatus, and a heat cycle method.

Background Art

Conventionally, working mediums such as working mediums for heat cycles, for example, refrigerants for freezing machines, refrigerants for air-conditioning equipment, working mediums for electric power generation (for example, waste heat recovery power generation), working mediums for latent heat transport apparatuses (for example, heat pipes), and secondary coolant mediums have been fingered as affecting the stratospheric ozone layer and affecting global warming. Therefore, it is urgently necessary to develop a working medium that less affects the ozone layer and that is small in global warming potential.

In particular, 1, 1, 1,2-tetrafluoroethane (R-134a) is non-flammable and is low in boiling point, and therefore is used in air-conditioning equipment for automobiles, freezing equipment, or the like, but has a high global warming potential (GWP (AR5)) of 1300, and therefore alternatives thereto are studied.

Patent Literature 1 describes a refrigerant mainly including a) a non-flammable highly volatile component including carbon dioxide, b) HCFO-1224yd(Z), HCFO-1224yd(E), HCFO-1233zd(E), HCFO-1233zd(Z), HCFO-1233xf, HFO-1336mzz(E), HFO-1336mzz(Z), 2-bromo-3,3,3-trifluoropropa-1-ene, and any mixture thereof, c) an intermediate volatile component selected from the group consisting HFO-1234yf, HFO-1234ze(E), HFO-1225ye(Z), HFO-1243zf, and any mixture thereof, and d) an optional component selected from the group consisting of HFC-227ea, HFC-152a, HFC-32, and any mixture thereof.

Citation List

Patent Literature

[Patent Literature 1] U.S. Patent Publication (US-A) No. 20220162489

SUMMARY OF INVENTION

Technical Problem

However, the refrigerant described in Patent Literature 1 includes a plurality of components largely different in boiling point, and therefore is large in temperature glide.

An object of one embodiment of the disclosure is to provide a working medium low in global warming potential and small in temperature glide.

An object of another embodiment of the disclosure is to provide a composition for a heat cycle system, and a heat cycle apparatus which each includes the working medium, and a heat cycle method with the working medium.

Solution to Problem

The disclosure includes the following aspects.

<1> A working medium including (E)-1,3,3,3-tetrafluoropropene, (Z)-1-chloro-2,3,3,3-tetrafluoropropene, and 1,1,1,2,3,3,3-heptafluoropropane, wherein a content of the 1,1,1,2,3,3,3-heptafluoropropane is 8.9% by mass or less with respect to a total content of the (E)-1,3,3,3-tetrafluoropropene, the (Z)-1-chloro-2,3,3,3-tetrafluoropropene, and the 1,1,1,2,3,3,3-heptafluoropropane, and a content of the (Z)-1-chloro-2,3,3,3-tetrafluoropropene is 24.5% by mass or less with respect to the total content.
<2> The working medium according to <1>, wherein the total content is 80.0% by mass or more with respect to a total amount of a working medium for a heat cycle.
<3> The working medium according to <1> or <2>, wherein the content of the 1,1,1,2,3,3,3-heptafluoropropane is 4.4% by mass or less with respect to the total content.
<4> The working medium according to any one of <1> to <3>, wherein the content of the (Z)-1-chloro-2,3,3,3-tetrafluoropropene is 15.0% by mass or less with respect to the total content.
<5> A composition for a heat cycle system, including the working medium according to any one of <1> to <4>, and freezing machine oil.
<6> A heat cycle apparatus including:

the working medium according to any one of <1> to <4>;
a compressor that compresses vapor of the working medium;
a condenser that cools and liquefies vapor of the working medium discharged from the compressor;
a decompressor that depressurizes the working medium discharged from the condenser; and
an evaporator that heats the working medium discharged from the decompressor, wherein
the evaporator is controlled so that an evaporation temperature of the working medium is from -40 to 10°C.

<7> The heat cycle apparatus according to <6>, wherein the evaporator is controlled so that the evaporation temperature of the working medium is from -25 to 10°C.
<8> The heat cycle apparatus according to <6>, wherein the evaporator is controlled so that the evaporation temperature of the working medium is from -10 to 10°C.
<9> A heat cycle method including:

compressing vapor of the working medium according to any one of <1> to <4>;
cooling and liquefying vapor of the working medium;
depressurizing the working medium liquefied; and
heating the working medium depressurized, at an evaporation temperature of from -40 to 10°C.

Advantageous Effects of Invention

According to one embodiment of the disclosure, a working medium low in global warming potential and small in temperature glide is provided.
According to another embodiment of the disclosure, a composition for a heat cycle system, and a heat cycle apparatus which each includes the working medium, and a heat cycle method with the working medium are provided.

BRIEF DESCRIPTION OF DRAWINGS

FIG. 1 is a schematic configuration view illustrating one example of a freezing cycle apparatus.
FIG. 2 is a cycle graph in which the change in state of a working medium in a freezing cycle apparatus is drawn on a pressure-enthalpy diagram.

DESCRIPTION OF EMBODIMENTS

In the disclosure, a numerical value range indicated with "(from) ... to ..." means a range including numerical values described before and after "to" respectively as the minimum value and the maximum value.
The upper limit value or the lower limit value described by a certain numerical value range as a numerical value range described stepwise in the disclosure may be replaced with the upper limit value or the lower limit value of other numerical value range described stepwise. The upper limit value or the lower limit value described by a certain numerical value range as a numerical value range described in the disclosure may be replaced with any value indicated in Examples.
A combination of two or more preferred aspects of the disclosure is a more preferred aspect.
In the disclosure, in a case in which a plurality of substances corresponding to each component is present, the total amount of such substances is meant as the amount of each component, unless particularly noted.
In the disclosure, the pressure indicates the absolute pressure, and is 101.3 kPa under atmospheric pressure.
In the disclosure, the saturated vapor pressure means the pressure of saturated vapor, and means the pressure at the point of intersection between an isothermal line and a saturated vapor line in a pressure-enthalpy diagram.
In the disclosure, the saturated liquid pressure means the pressure of a saturated liquid, and means the pressure at the point of intersection between an isothermal line and a saturated liquid line in a pressure-enthalpy diagram.

[Working Medium]

The working medium of the disclosure includes (E)-1,3,3,3-tetrafluoropropene (HFO-1234ze(E)), (Z)-1-chloro-2,3,3,3-tetrafluoropropene (HCFO-1224yd(Z)), and 1,1,1,2,3,3,3-heptafluoropropane (HFC-227ea), in which the content of HFC-227ea is 8.9% by mass or less with respect to the total content of HFO-1234ze(E), HCFO-1224yd(Z), and HFC-227ea, and the content of HCFO-1224yd(Z) is 24.5% by mass or less with respect to the above total content.

In the disclosure, the working medium means a medium carrying heat, and conceptually encompasses a refrigerant composition and a heat medium composition. Herein, the refrigerant composition is mainly a medium assuming cooling of a heat source, and may also be simultaneously used as a medium assuming heating. The heat medium composition is mainly a medium assuming heating, and may also be simultaneously used as a medium assuming cooling of a heat source.

The working medium of the disclosure is preferably for a heat cycle. Specifically, the working medium of the disclosure is preferably used in a heat cycle system in which absorption of heat and liberation of heat are utilized to provide a series of changes involving bringing about the change in state and again returning to the initial state.

The working medium of the disclosure is low in global warming potential (GWP) and small in temperature glide. Although the reason for this is not clear, the following is presumed.

HFO-1234ze(E) has a boiling point of -18.97°C and a GWP of 1 or less, but is mildly flammable.

HCFO-1224yd(Z) has a low GWP of 1 or less and is non-flammable, but has a slightly higher boiling point of 14.62°C than HFO-1234ze(E).

HFC-227ea has a boiling point close to that of HFO-1234ze(E), of -16.34°C, and is non-flammable, but has a high GWP of 3350.

The present inventor has found that both reductions in GWP and temperature glide can be achieved by mixing HFO-1234ze(E), HCFO-1224yd(Z), and HFC-227ea at a specified ratio.

Specifically, it has been considered that, since HFO-1234ze(E) is low in boiling point and low in GWP and has a low boiling point, but has mild flammability, flammability can be reduced by a combination with a non-flammable additional component in order to suppress flammability with HFO-1234ze(E) being adopted as a main component. However, as the difference in boiling point between such an additional component and HFO-1234ze(E) is increased, a higher temperature glide is caused, and therefore it is desirable to combine HFC-227ea having a boiling point close to the boiling point of HFO-1234ze(E). However, it is difficult to increase the content of HFC-227ea from the viewpoint that HFC-227ea is high in GWP and thus reduces GWP of a working medium. It has been then found that HCFO-1224yd(Z) which is non-flammable and which is low in GWP is further combined, thereby obtaining a working medium low in GWP and small in temperature glide. HFO-1234ze(Z) as an isomer of HFO-1234ze(E) is slightly higher in boiling point than R-134a, and therefore the inventor has focused on HFO-1234ze(E). HCFO-1224yd(E) as an isomer of HCFO-1224yd(Z) is higher in boiling point than HCFO-1224yd(Z), and therefore the inventor has focused on HCFO-1224yd(Z).

Specifically, the inventor has found that a GWP of 300 or less and a temperature glide of 5.0 or less can be achieved.

On the contrary, the refrigerant described in Patent Literature 1 includes a plurality of components largely different in boiling point, and therefore is high in temperature glide and cannot achieve both reductions in GWP and temperature glide.

Hereinafter, each component included in the working medium of the disclosure is described.

The working medium of the disclosure includes HFO-1234ze(E), HCFO-1224yd(Z), and HFC-227ea.

Other components than HFO-1234ze(E), HCFO-1224yd(Z), and HFC-227ea can affect GWP and the temperature glide of the working medium. Therefore, the content of such other components is preferably low.

From the above viewpoint, the total content of HFO-1234ze(E), HCFO-1224yd(Z), and HFC-227ea in the working medium of the disclosure is preferably 80.0% by mass or more, more preferably 90.0% by mass or more, still more preferably 95.0% by mass or more, particularly preferably 99.0% by mass or more with respect to the total amount of the working medium. The upper limit value of the total content of HFO-1234ze(E), HCFO-1224yd(Z), and HFC-227ea is not particularly limited, and may be 100% by mass.

<HFO-1234ze(E)>

The working medium of the disclosure includes HFO-1234ze(E).

In the working medium of the disclosure, the content of HFC-227ea may be 8.9% by mass or less with respect to the total content of HFO-1234ze(E), HCFO-1224yd(Z), and HFC-227ea and the content of HCFO-1224yd(Z) may be 24.5% by mass or less with respect to the above total content, and the content of HFO-1234ze(E) can be appropriately adjusted depending on the respective contents of HCFO-1224yd(Z) and HFC-227ea, and is not particularly limited.

HFO-1234ze(E) has a low boiling point of -18.97°C and is excellent in performance in the case of serving as the working medium, as described above, and therefore preferably serves as a main component (component highest in content) among such three components of HFO-1234ze(E), HCFO-1224yd(Z), and HFC-227ea.

HFO-1234ze(E) preferably serves as a main component also from the viewpoints of having a GWP of 1 or less, having particularly low flammability in the category of a mildly flammable refrigerant, furthermore having a boiling point relatively close to that of R-134a, and small in difference in boiling point from a non-flammable component.

The content of HFO-1234ze(E) is preferably 66.6% by mass or more, more preferably 70.0% by mass or more, still more preferably 80.6% by mass or more with respect to the total content of HFO-1234ze(E), HCFO-1224yd(Z), and HFC-227ea from the viewpoint that the respective contents of HCFO-1224yd(Z) and HFC-227ea are set within the above ranges. The upper limit value of the content of HFO-1234ze(E) is, for example, 95.0% by mass.

<HCFO-1224yd(Z)>

The working medium of the disclosure includes HCFO-1224yd(Z).
The content of HCFO-1224yd(Z) is 24.5% by mass or less with respect to the total content of HFO-1234ze(E), HCFO-1224yd(Z), and HFC-227ea. The working medium of the disclosure includes HCFO-1224yd(Z), and therefore the content of HCFO-1224yd(Z) is more than 0% by mass.
In a case in which the content of HCFO-1224yd(Z) is 24.5% by mass or less, the difference in temperature between the dew point and the boiling point at the atmospheric pressure is 7.30°C or less and therefore the temperature glide is decreased.
The content of HCFO-1224yd(Z) is preferably 15.0% by mass or less, more preferably 10.0% by mass or less with respect to the total content of HFO-1234ze(E), HCFO-1224yd(Z), and HFC-227ea from the viewpoint of a more decrease in temperature glide.
In a case in which the content of HCFO-1224yd(Z) is 15.0% by mass or less, the difference in temperature between the dew point and the boiling point at the atmospheric pressure is 5.30°C or less, thereby resulting in a tendency to reduce the temperature glide to 3.0 or less. In a case in which the content of HCFO-1224yd(Z) is 10.0% by mass or less, the difference in temperature between the dew point and the boiling point at the atmospheric pressure is 4.00°C or less, thereby resulting in a tendency to reduce the temperature glide to 2.0 or less.
The content of HCFO-1224yd(Z) is preferably 3.0% by mass or more with respect to the total content of HFO-1234ze(E), HCFO-1224yd(Z), and HFC-227ea from the viewpoint of an enhancement in coefficient of performance (COP) in the heat cycle system.

<HFC-227ea>

The working medium of the disclosure includes HFC-227ea.
The content of HFC-227ea is 8.9% by mass or less with respect to the total content of HFO-1234ze(E), HCFO-1224yd(Z), and HFC-227ea. The working medium of the disclosure includes HFC-227ea, and therefore the content of HFC-227ea is more than 0% by mass.
In a case in which the content of HFC-227ea is 8.9% by mass or less, GWP is reduced.
The content of HFC-227ea is preferably 4.4% by mass or less, more preferably 3.0% by mass or less with respect to the total content of HFO-1234ze(E), HCFO-1224yd(Z), and HFC-227ea from the viewpoint of a more reduction in GWP.
In a case in which the content of HFC-227ea is 4.4% by mass or less, a GWP of 150 or less can be achieved. In a case in which the content of HFC-227ea is 3.0% by mass or less, a GWP of 101 or less can be achieved.
The content of HFC-227ea is preferably 2.0% by mass or more with respect to the total content of HFO-1234ze(E), HCFO-1224yd(Z), and HFC-227ea from the viewpoint of a reduction in heat of combustion (HOC).
The working medium of the disclosure may contain a compound which is commonly used as an optional component in the working medium, in addition to HFO-1234ze(E), HCFO-1224yd(Z), and HFC-227ea. Examples of such an optional component include HFC and HFO other than HFO-1234ze(E), HCFO-1224yd(Z), and HFC-227ea. The optional component may be adopted singly or in combination of two or more kinds thereof.
Examples of HFC as such an optional component include fluoroethane (HFC-161), 1,1-difluoroethane (HFC-152a), 1,1,1-trifluoroethane (HFC-143a), pentafluoropropane, hexafluoropropane, pentafluorobutane, and heptafluorocyclopentane.
Examples of HFO as such an optional component include trifluoroethylene (HFO-1123), 1,2-difluoroethylene (HFO-1132), 2-fluoropropene (HFO-1261yf), 1,1,2-trifluoropropene (HFO-1243yc), 2,3,3,3-tetrafluoropropene (HFO-1234yf), 1,2,3,3,3-pentafluoropropene (HFO-1225ye), 3,3,3-trifluoropropene (HFO-1243zt), (Z)-1,1,1,4,4,4-hexafluorobutene (HFO-1336mzz(Z)), and (E)-1,1,1,4,4,4-hexafluorobutene (HFO-1336mzz(E)).
Examples of any other optional component than the HFC and HFO include hydrocarbons such as propylene, butane, pentane, and isopentane; chlorofluoroolefins (CFO) such as 1,1-dichloro-2,3,3,3-tetrafluoropropene (CFO-1214ya), 1,3-dichloro-1,2,3,3-tetrafluoropropene (CFO-1214yb), and 1,2-dichloro-1,2-difluoroethylene (CFO-1112); and hydrochlorofluoroolefins (HCFO) such as 1-chloro-2,2-difluoroethylene (HCFO-1122), 1-chloro-1,2-difluoroethylene (HCFO-1122a), (E)-1-chloro-3,3,3-trifluoropropene (HCFO-1233zd(E)), (Z)-1-chloro-3,3,3-trifluoropropene (HCFO-1233zd(Z)), 2-chloro-1,1,3-trifluoropropene (HCFO-1233xc), 2-chloro-3,3,3-trifluoropropene (HCFO-1233xf), (E)1-chloro-2,3,3,3-tetrafluoropropene (HCFO-1224yd(E)), 2-chloro-1,1,3,3-tetrafluoropropene (HCFO-1224xc), and 2-chloro-1,3,3,3-tetrafluoropropene (HCFO-1224xe).
In a case in which the working medium of the disclosure contains such an optional component, the content of such an optional component is preferably 20.0% by mass or less, more preferably 10.0% by mass or less, still more preferably 5.0% by mass or less, particularly preferably 1.0% by mass or less with respect to the total amount of the working medium.

<Cycle Performance>

The cycle performance as performance necessary for application of the working medium to the heat cycle system can be evaluated by the coefficient of performance (in the disclosure, also referred to as "COP".), and the capacity per unit volume (in the disclosure, also referred to as "CAP".), as the product of the density ρs of compressor suction gas and the freezing effect (in the disclosure, also referred to as "wr".). In a case in which the heat cycle system is a freezing cycle system, the capacity is the freezing capacity. Examples of the evaluation item in the case of application of the working medium to a freezing cycle system further include, in addition to the cycle performance, the freezing effect, and the respective temperature glides in an evaporator and a condenser. Specifically, calculation is performed with respect to each item by, for example, a method described below, with a reference freezing cycle in the following temperature conditions. Evaluation is performed by converting the respective temperature glides in an evaporator and a condenser into absolute values, and CAP, COP, and wr into relative values with, as reference, the value of R-134a.

(Temperature Conditions of Reference Freezing Cycle)

Evaporation temperature; 0°C (provided that, in the case of a non-azeotropic mixture, the average temperature of the evaporation start temperature and the evaporation completion temperature is adopted and therefore calculation is performed as "Evaporation temperature = (Evaporation start temperature + Evaporation completion temperature)/2.)
Condensation temperature; 45°C (provided that, in the case of a non-azeotropic mixture, the average temperature of the condensation start temperature and the condensation completion temperature is adopted and therefore calculation is performed as "Condensation temperature =
(Condensation start temperature + Condensation completion temperature)/2.)
Degree of supercooling (SC); 0°C
Degree of superheat (SH); 5°C
Compressor efficiency; 0.7

(Freezing Cycle System)

A freezing cycle system as one example of the heat cycle system is described.
The freezing cycle system is a system that cools the working medium to a lower temperature by removing thermal energy with a load fluid in an evaporator and thus cooling the load fluid.

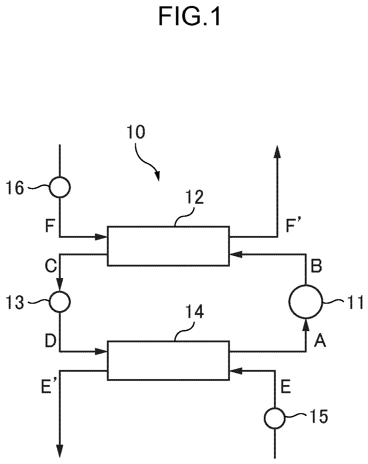

FIG. 1 is a schematic configuration view illustrating one example of the freezing cycle system in the disclosure. A freezing cycle system 10 is a system schematically configured by including a compressor 11 that compresses working medium vapor A, to provide high-temperature and high-pressure working medium vapor B, a condenser 12 that cools and liquefies the working medium vapor B discharged from the compressor 11, to provide a low-temperature and high-pressure working medium C, an expansion valve 13 that expands the working medium C discharged from the condenser 12, to provide a low-temperature and low-pressure working medium D, an evaporator 14 that heats the working medium D discharged through the expansion valve 13, to provide high-temperature and low-pressure working medium vapor A, a pump 15 that supplies a load fluid E to the evaporator 14, and a pump 16 that supplies a fluid F to the condenser 12.
The following cycles (i) to (iv) are repeated in the freezing cycle system 10.

(i) Compressing the working medium vapor A discharged from the evaporator 14, in the compressor 11, to provide high-temperature and high-pressure working medium vapor B (hereinafter, referred to as "AB process".).
(ii) Cooling and liquefying the working medium vapor B discharged from the compressor 11, by the fluid F in the condenser 12, to provide a low-temperature and high-pressure working medium C. Here, the fluid F is heated and formed into a fluid F', and discharged from the condenser 12 (hereinafter, referred to as "BC process".).
(iii) Expanding the working medium C discharged from the condenser 12, in the expansion valve 13, to provide a low-temperature and low-pressure working medium D (hereinafter, referred to as "CD process".).
(iv) Heating the working medium D discharged through the expansion valve 13, by the load fluid E in the evaporator 14, to provide high-temperature and low-pressure working medium vapor A. Here, the load fluid E is cooled and formed into a load fluid E', and discharged from the evaporator 14 (hereinafter, referred to as "DA process".).

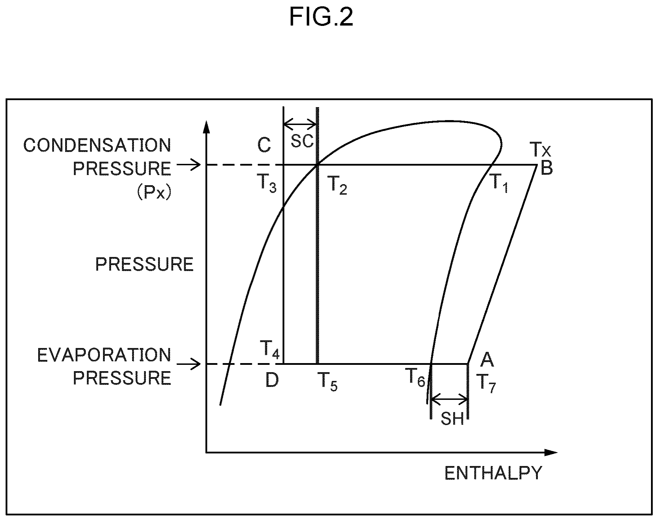

The freezing cycle system 10 is a cycle system composed of adiabatic-isentropic change, isenthalpic change and isobaric change. The change in state of the working medium, which is drawn on a pressure-enthalpy line (curve) drawing illustrated in FIG. 2, can be indicated with A, B, C, and D as vertexes.

The AB process is a process in which adiabatic compression is performed in the compressor 11, to convert low-temperature and low-pressure working medium vapor A into high-temperature and high-pressure working medium vapor B, and is illustrated by an AB line in FIG. 2. As described below, the working medium vapor A is introduced in a superheated state, into the compressor 11, and the obtained working medium vapor B is also vapor in a superheated state. The density of compressor suction gas is the density (ρs) of the state of A in FIG. 2. The compressor ejection gas temperature (ejection temperature) is the temperature (Tx) of the state of B in FIG. 2, and is the highest temperature in the freezing cycle. The compressor ejection pressure (ejection pressure) is the pressure (Px) of the state of B in FIG. 2, and is the highest pressure in the freezing cycle. The BC process corresponds to isobaric cooling and therefore the ejection pressure represents the same value as that of the condensation pressure (Pc). Accordingly, the condensation pressure is designated as Px in FIG. 2, for convenience purposes.

The BC process is a process in which isobaric cooling is performed in the condenser 12, to convert the high-temperature and high-pressure working medium vapor B into a low-temperature and high-pressure working medium C, and is illustrated by a BC line in FIG. 2. The pressure here is the condensation pressure. The point of intersection T1, located at the higher enthalpy side, between the points of intersection with the pressure-enthalpy line and the BC line, is the condensation temperature, and the point of intersection T2, located at the lower enthalpy side, is the condensation boiling point temperature. The temperature gradient in the condenser in the case of the working medium being a non-azeotropic medium is indicated as the difference between T1 and T2.

The CD process is a process in which isenthalpic expansion is performed in the expansion valve 13, to convert the low-temperature and high-pressure working medium C into a low-temperature and low-pressure working medium D, and is illustrated by a CD line in FIG. 2. In a case in which the temperature in the low-temperature and high-pressure working medium C is indicated by T3, T2-T3 corresponds to the degree of supercooling (SC) of the working medium in the cycles (i) to (iv).

The DA process is a process in which isobaric heating is performed in the evaporator 14, to return the low-temperature and low-pressure working medium D to high-temperature and low-pressure working medium vapor A, and is illustrated by a DA line in FIG. 2. The pressure here is the evaporation pressure. The point of intersection T6, located at the higher enthalpy side, between the points of intersection with the pressure-enthalpy line and the DA line, is the evaporation temperature. The temperature gradient in the evaporator in the case of the working medium being a non-azeotropic medium is indicated as the difference between T6 and T4. In a case in which the temperature of the working medium vapor A is indicated by T7, T7-T6 corresponds to the degree of superheat (SH) of the working medium in the cycles (i) to (iv). T4 represents the temperature of the working medium D.

CAP and the COP of the working medium are determined from the following Formulas (11), (12), (13), and (14) with each enthalpy in the states of A (after evaporation, low-temperature and low-pressure), B (after compression, high-temperature and high-pressure), C (after condensation, low-temperature and high-pressure), and D (after expansion, low-temperature and low-pressure) of the working medium, hA, hB, hC, hD, and the quantity by mass of circulation of the working medium qmr, provided that the pressure loss in wiring and a heat exchanger shall not occur.

In a case in which the work of the compressor is applied as heat into the working medium, the compressor efficiency η is used to represent the working medium vapor B' after the AB process by the following Formula with hA, hB, and η.

$$hB' = hA + (hB - hA)/\eta$$

The cycle performance of the working medium is determined by carrying out the freezing cycle theoretical calculation of the working medium under the temperature conditions of the reference freezing cycle, by use of National Institute of Science and Technology (NIST) Reference Fluid Thermodynamic and Transport Properties Database (REFPROP 10.0).

$$CAP = (hA - hD) \times \rho s = wr \times \rho s \ldots (11)$$

$$COP = Q/P = qmr (hA - hD)/qmr (hB - hA) = (hA - hD)/(hB - hA)\ldots(12)$$

$$Q = qmr (hA - hD)\ldots(13)$$

$$P = qmr (hB - hA)\ldots(14)$$

In consideration of the compressor efficiency, COP and P are according to the following Formulas.

$$COP = Q/P = (hA - hD)/(hB' - hA)...(15)$$

$$P = qmr (hB' - hA)...(16)$$

<Temperature Glide>

The temperature glide is an indicator of the difference in compositional ratio between a liquid phase and a gas phase in a working medium of a mixture. The temperature glide is defined as the difference in performance between the start temperature and the completion temperature of evaporation in a heat exchanger, for example, an evaporator, or of condensation in a condenser. In the disclosure, the difference in performance between the start temperature and the completion temperature of evaporation in the evaporator is referred to as "evaporation glide". The difference in performance between the start temperature and the completion temperature of condensation in the condenser is referred to as "condensation glide". The evaporation glide and the condensation glide are collectively referred to as "temperature glide".

The temperature glide in an azeotropic mixed medium is zero, and the temperature gradient in a quasi-azeotropic mixture such as R410A is extremely close to zero.

A large temperature glide is problematic because, for example, frost formation can be more highly caused due to a reduction in inlet temperature in the evaporator. Since a common heat cycle system is set so that a working medium flowing in a heat exchanger and a heat source fluid such as water or air are countercurrent in order to achieve an enhancement in heat-exchange efficiency, and is small in difference in temperature of the heat source fluid in a stable operating state, a highly energy-efficient heat cycle system is difficult to obtain in the case of a non-azeotropic medium large in temperature glide. Therefore, in a case in which a mixture is used as a working medium, a working medium having an appropriate temperature glide is desired.

<Freezing Effect (wr)>

The freezing effect is the calorie per unit weight (kJ/kg) of absorption by the working medium in the evaporator in the freezing cycle system. The value obtained by multiplying the quantity by mass of circulation of the working medium, with wr, is the freezing capacity Q. In the disclosure, the freezing effect (wr) is evaluated by conversion into the relative value with, as reference, the value of R-134a.

<Global Warming Potential (GWP)>

In the disclosure, GWP is the value (100 years) in Intergovernmental Panel on Climate Change (IPCC), Fifth assessment report (AR5), unless particularly noted.

GWP in the mixture is the weighted average with the compositional ratio by mass. In consideration of GWP in the mixture, calculation is made under the assumption that a GWP of 1 or less is set to 1.

<Heat of Combustion>

The heat of combustion per mass (MJ/kg) is defined as an indicator that determines flammability of a refrigerant according to American Society of Heating, Refrigeration and Air-conditioning Engineers (ASHRAE) Standard 34. In this Standard, a substance in which an amount of heat of generation of 19.000 MJ/kg or more is defined as one indicator of a "strongly flammable" refrigerant.

The heat of combustion is represented by the difference between the sum formation enthalpy of a product in the production system and the formation enthalpy of a compound in the reaction system, in a combustion reaction formula.

Formation enthalpies are described in, for example, chemistry handbooks, international standards (see Reference Literature A), and various handbooks.

The formation enthalpy of a novel compound can be determined by the Benson group additivity rule (see Reference Literature B), or a calculation procedure.

The mode of thought of the combustion reaction formula of a compound containing halogen is prescribed in international standards (see Reference Literatures A and C).

Reference Literature A: ANSI/ASHRAE Standard 34(2016), Designation and Safety Classification of Refrigerants.

Reference Literature B: S. Benson, Thermo chemical kinetics, 2nd Ed., Wiley Interscience, New York (1976).
Reference Literature C: ISO 817(2014), Refrigerant: Designation and Safety Classification.

In this standard, the heat of consumption in an exothermic reaction is assumed to be positive.

In the disclosure, the heat of combustion of the working medium is defined as the value obtained by converting the value of the heat of combustion, which is obtained by stoichiometrically complete consumption of 1 mol of the working medium together with oxygen, into the value of the heat of combustion per kg of the working medium, and refers to the theoretical value calculated under the following assumption.

The compounds in the production system and the reaction system are assumed to be gaseous.

The combustion products are assumed to be HF (g), $CO_2$ (g), $COF_2$ (g), and $H_2O$ (g). In a case in which chlorine, nitrogen, or iodine serves as one portion of a molecular structure of a substance, $Cl_2$ (g), $N_2$ (g), or $I_2$ (g) is added as a combustion product.

In a case in which the heat of combustion of the working medium is determined, each compound included in the working medium is divided into atoms constituting such each compound, and a postulated substance containing each atom is set in consideration of the molar ratio in the working medium. The heat of combustion is calculated with the combustion reaction formula of the postulated substance. $C_qH_rF_s$ in the following Formula corresponds to the postulated substance.

For example, the combustion reaction formula is defined by a magnitude relation between the number of H atoms (r) and the number of F atoms (s) in the substance, and the combustion reaction formula used in the case of the number of H atoms (r) ≥ the number of F atoms (s) is the following Formula.

[Formula 1]

$$C_qH_rF_s + \left(q + \frac{r-s}{4}\right)O_2 = sHF + qCO_2 + \frac{r-s}{2}H_2O \qquad (r \geq s)$$

In this regard, the combustion reaction formula used in the case of the number of H atoms (r) < the number of F atoms (s) is the following Formula.

[Formula 2]

$$C_qH_rF_s + \left(q - \frac{s-r}{4}\right)O_2 = rHF + \frac{s-r}{2}COF_2 + \left(q - \frac{s-r}{2}\right)CO_2 \qquad (r < s)$$

The working medium of the disclosure includes HCFO-1224yd(Z), and therefore $Cl_2$ (g) is added as a combustion product, but the standard formation enthalpy of $Cl_2$ is zero and therefore has no influence on the value of the heat of combustion.

[Composition for Heat Cycle System]

The composition for a heat cycle system of the disclosure preferably includes the working medium of the disclosure, and freezing machine oil.

(Freezing Machine Oil)

The freezing machine oil used here can be conventionally known freezing machine oil used in compositions for heat cycle systems. Specific examples of the freezing machine oil include oxygen-containing synthetic oil (ester-based freezing machine oil, ether-based freezing machine oil, or the like), fluorine-based freezing machine oil, mineral-based freezing machine oil, and hydrocarbon-based synthetic oil.

Examples of the ester-based freezing machine oil include dibasic acid ester oil, polyol ester oil, complex ester oil, and polyol carbonate oil.

The dibasic acid ester oil is preferably an ester of a dibasic acid having from 5 to 10 carbon atoms (glutaric acid, adipic acid, pimelic acid, suberic acid, azelaic acid, sebacic acid, or the like), and a monohydric alcohol having a linear or branched alkyl group and having from 1 to 15 carbon atoms (methanol, ethanol, propanol, butanol, pentanol, hexanol, heptanol, octanol, nonanol, decanol, undecanol, dodecanol, tridecanol, tetradecanol, pentadecanol, or the like). The dibasic acid ester oil is preferably ditridecyl glutarate, di(2-ethylhexyl) adipate, diisodecyl adipate, ditridecyl adipate, or di(3-ethylhexyl) sebacate.

The polyol ester oil is preferably an ester of a diol (ethylene glycol, 1,3-propanediol, propylene glycol, 1,4-butanediol, 1,2-butanediol, 1,5-pentadiol, neopentyl glycol, 1,7-heptanediol, 1,12-dodecanediol, or the like) or a polyol having from 3 to 20 hydroxyl groups (trimethylolethane, trimethylolpropane, trimethylolbutane, pentaerythritol, glycerin, sorbitol, sorbitan, sorbitol/glycerin condensate, or the like) and a fatty acid having from 6 to 20 carbon atoms (a linear or branched fatty acid such as hexanoic acid, heptanoic acid, octanoic acid, nonanoic acid, decanoic acid, undecanoic acid, dodecanoic acid, eicosanoic acid or an oleic acid, a so-called neo acid with a quaternary $\alpha$-carbon atom, or the like). Such polyol ester oil may have a free hydroxyl group.

The polyol ester oil is preferably an ester of hindered alcohol (neopentyl glycol, trimethylolethane, trimethylolpropane, trimethylolbutane, pentaerythritol, or the like), more preferably trimethylolpropane tripelargonate, pentaerythritol 2-ethylhexanoate, or pentaerythritol tetrapelargonate.

The complex ester oil is an ester of a fatty acid and a dibasic acid, and a monohydric alcohol and a polyol. The fatty acid, the dibasic acid, the monohydric alcohol, and the polyol used here can be each the same as described above.

The polyol carbonate oil is an ester of carbonic acid and a polyol. Examples of the polyol include the same diol as described above and the same polyol as described above. The polyol carbonate oil may be a ring-opened polymer of a cyclic alkylene carbonate.

Examples of the ether-based freezing machine oil include polyvinyl ether oil and polyoxyalkylene oil.

Examples of the polyvinyl ether oil is a polymer obtained by polymerizing a vinyl ether monomer such as an alkyl vinyl ether, and a copolymer obtained by copolymerizing a vinyl ether monomer and a hydrocarbon monomer having an olefinic double bond.

The vinyl ether monomer may be adopted singly or in combination of two or more kinds thereof.

Examples of the hydrocarbon monomer having an olefinic double bond include ethylene, propylene, various butenes, various pentens, various hexenes, various heptenes, various octenes, diisobutylene, triisobutylene, styrene, $\alpha$-methylstyrene, and various alkylsubstituted styrenes. The hydrocarbon monomer having an olefinic double bond may be adopted singly or in combination of two or more kinds thereof.

The polyvinyl ether oil may be any of a block copolymer and a random copolymer.

Examples of the polyoxyalkylene oil include a polyoxyalkylene monool and a polyoxyalkylene polyol; an alkyl etherified product of a polyoxyalkylene monool or a polyoxyalkylene polyol; and an esterified product of a polyoxyalkylene monool or a polyoxyalkylene polyol.

The polyoxyalkylene monool and the polyoxyalkylene polyol can be each produced by, for example, a method including ring-opening addition polymerization of an alkylene oxide having from 2 to 4 carbon atoms (ethylene oxide, propylene oxide, or the like) with an initiator such as water or a hydroxyl group-containing compound in the presence of a catalyst such as alkali hydroxide. The kind of each oxyalkylene unit in the polyalkylene chain contained in one molecule may be the same, or two or more kinds of such oxyalkylene units may be contained. At least an oxypropylene unit is preferably contained in one molecule.

Examples of the initiator used in the reaction include water; monohydric alcohols such as methanol and butanol; and polyhydric alcohols such as ethylene glycol, propylene glycol, pentaerythritol, and glycerol.

The polyoxyalkylene oil is preferably an alkyl etherified product or esterified product of a polyoxyalkylene monool or a polyoxyalkylene polyol. The polyoxyalkylene oil is preferably polyalkylene glycol oil. In particular, an alkyl etherified product of a polyalkylene glycol is preferred which is called polyglycol oil, in which a terminal hydroxyl group of polyalkylene glycol is capped with an alkyl group such as a methyl group.

Examples of the fluorine-based freezing machine oil include a compound in which a hydrogen atom in synthetic oil (mineral oil, poly-$\alpha$-olefin, alkylbenzene, alkylnaphthalene, or the like described below) is substituted with a fluorine atom, fluorine-containing oil, perfluoropolyether oil, and fluorinated silicone oil.

Examples of the mineral-based freezing machine oil include mineral oil (for example, paraffin-based mineral oil or naphthene-based mineral oil) obtained by purification of a freezing machine oil fraction obtained by evaporation of crude oil at ordinary pressure or evaporation under reduced pressure with an appropriate combination of purification treatments (solvent deasphalting, solvent extraction, hydrogenolysis, solvent dewaxing, catalytic dewaxing, hydrorefining, clay treatment, and the like).

Examples of the hydrocarbon-based synthetic oil include poly $\alpha$-olefin, alkylbenzene, and alkylnaphthalene.

The freezing machine oil included in the composition for a heat cycle system may be adopted singly or in combination of two or more kinds thereof.

In particular, the freezing machine oil is preferably at least one selected from the group consisting of polyalkylene glycol oil, polyol ester oil, polyvinyl ether oil, silicone oil, fluorine-containing oil, mineral oil, and hydrocarbon-based synthetic oil.

The freezing machine oil may further include at least one selected from the group consisting of an antioxidant, an extreme pressure agent, an acid scavenger, an oxygen scavenger, a copper deactivator, a rust inhibitor, an oily agent, and a defoamer.

The content of the freezing machine oil in the composition for a heat cycle system may be in any range as long as the effects of the disclosure are not remarkably deteriorated, and the content is preferably from 10 parts by mass to 100 parts by mass, more preferably from 20 parts by mass to 50 parts by mass with respect to 100 parts by mass of the working medium.

(Additive)

The composition for a heat cycle system may further include, in addition to the working medium and the freezing machine oil, at least one known additive selected from the group consisting of a tracer, a stabilizer, a polymerization inhibitor, and a leakage detection substance.

The tracer is preferably contained at a detectable concentration so that, in a case in which any change with dilution, contamination, or the like occurs in the working medium of the disclosure, such any change can be tracked.

The tracer included in the working medium of the disclosure may be adopted singly or in combination of two or more kinds thereof.

The tracer is not particularly limited, and can be appropriately selected from tracers commonly used. It is preferable to select, as the tracer, a compound which cannot serve as an impurity inevitably incorporated into the working medium of the disclosure.

Examples of a preferred tracer include the following compounds.

HC-40 (chloromethane, $CH_3Cl$)
HFC-161 (fluoroethane, $CH_3CH_2F$)
HFC-245fa (1,1,1,3,3-pentafluoropropane, $CF_3CH_2CHF_2$)
HFC-236fa (1,1,1,3,3,3-hexafluoropropane, $CF_3CH_2CF_3$)
HFC-236ea (1,1,1,2,3,3-hexafluoropropane, $CF_3CHFCHF_2$)
HCFC-22 (chlorodifluoromethane, $CHClF_2$)
HCFC-31 (chlorofluoromethane, $CH_2ClF$)
CFC-1113 (chlorotrifluoroethylene, $CF_2=CClF$)
HFE-125 (trifluoromethyl-difluoromethyl ether, $CF_3OCHF_2$)
HFE-134a (trifluoromethyl-fluoromethyl ether, $CF_3OCH_2F$), HFE-143a (trifluoromethyl-methyl ether, $CF_3OCH_3$)
HFE-227ea (trifluoromethyl-tetrafluoroethyl ether, $CF_3OCHFCF_3$)
HFE-236fa (trifluoromethyl-trifluoroethyl ether, $CF_3OCH_2CF_3$)

The content of the tracer is preferably from 10 ppm to 1000 ppm, more preferably from 30 ppm to 500 ppm, still more preferably from 50 ppm to 300 ppm, particularly preferably from 75 ppm to 250 ppm, most preferably from 100 ppm to 200 ppm with respect to the total amount of the working medium.

The stabilizer is a component that enhances stability of the working medium against heat and oxidation. Examples of the stabilizer include conventionally known stabilizers, for example, an oxidation resistance enhancer, a heat resistance enhancer, and a metal deactivator.

Examples of the oxidation resistance enhancer and the heat resistance enhancer include N,N'-diphenylphenylenediamine, p-octyldiphenylamine, p,p'-dioctyldiphenylamine, N-phenyl-1-naphthylamine, N-phenyl-2-naphthylamine, N-(p-dodecyl)phenyl-2-naphthylamine, di-1-naphthylamine, di-2-naphthylamine, N-alkylphenothiazine, 6-(t-butyl)phenol, 2,6-di-(t-butyl)phenol, 4-methyl-2,6-di-(t-butyl)phenol, and 4,4'-methylenebis(2,6-di-t-butylphenol). The oxidation resistance enhancer and the heat resistance enhancer may be each adopted singly or in combination of two or more kinds thereof.

Examples of the metal deactivator include imidazole, benzimidazole, 2-mercaptobenzothiazole, 2,5-dimethylcaptothiadiazole, salicylidine-propylenediamine, pyrazole, benzotriazole, tolutriazole, 2-methylbenzamidazole, 3,5-dimethylpyrazole, methylenebis-benzotriazole, an organic acid or any ester thereof, a primary, secondary, or tertiary aliphatic amine, an amine salt of an organic acid or inorganic acid, a heterocyclic nitrogen-containing compound, and an amine salt of alkyl acid phosphate or any derivative thereof.

The content of the stabilizer may be in any range as long as the effects of the disclosure are not remarkably deteriorated, and the content is usually from 0.01% by mass to 5% by mass, preferably from 0.05% by mass to 3% by mass, more preferably from 0.1% by mass to 2% by mass, still more preferably from 0.25% by mass to 1.5% by mass, particularly preferably from 0.5% by mass to 1% by mass with respect to 100 parts by mass of the working medium.

The polymerization inhibitor is not particularly limited, and can be appropriately selected from polymerization inhibitors commonly used. The polymerization inhibitor included in the working medium of the disclosure may be adopted singly or in combination of two or more kinds thereof.

Examples of the polymerization inhibitor include 4-methoxy-1-naphthol, hydroquinone, hydroquinone methyl ether, dimethyl-tert-butylphenol, 2,6-di-tert-butyl-p-cresol, and benzotriazole.

The content of the polymerization inhibitor is not particularly limited, and is usually from 0.01% by mass to 5% by mass, preferably from 0.05% by mass to 3% by mass, more preferably from 0.1% by mass to 2% by mass, still more preferably from 0.25% by mass to 1.5% by mass, particularly preferably from 0.5% by mass to 1% by mass with respect to the total amount of the working medium.

Examples of the leakage detection substance include an ultraviolet fluorescent dye, odorous gas, and an odor masking agent.

Examples of the ultraviolet fluorescent dye include conventionally known ultraviolet fluorescent dyes described in U.S. Patent (US-B) No. 4249412, Japanese National-Phase Publication (JP-A) No. H10-502737, JP-ANo. 2007-511645, JP-A No. 2008-500437, JP-A No. 2008-531836.

Examples of the odor masking agent include conventionally known perfumes described in JP-A No. 2008-500437 and JP-A No. 2008-531836.

In a case in which the leakage detection substance is used, a solubilizer that enhances solubility of the leakage detection substance in the working medium may be used.

Examples of the solubilizer include those described in JP-A No. 2007-511645, JP-A No. 2008-500437, and JP-A No. 2008-531836.

The content of the leakage detection substance may be in any range as long as the effects of the disclosure are not remarkably deteriorated, and the content is preferably 2 parts by mass or less, more preferably 0.5 parts by mass or less with respect to 100 parts by mass of the working medium.

The composition for a heat cycle system is used in a heat cycle system. The heat cycle system may be a heat pump system utilizing heat obtained in the condenser, or may be a freezing cycle system utilizing cold obtained in the evaporator.

Specific examples of the heat cycle system include chilling and freezing equipment, air-conditioning equipment, heating and hot water equipment, an electric power generation systems, a heat transport apparatus, and a secondary cooling machine. In particular, the heat cycle system can stably and safely exert heat cycle performance even in a higher-temperature working environment, and therefore is preferably used as air-conditioning equipment often installed outdoors. The heat cycle system is also preferably used as chilling and freezing equipment.

Specific examples of the air-conditioning equipment include a room air conditioner, a package air conditioner (a package air conditioner for stores, a package air conditioner for buildings, a package air conditioner for facilities, or the like), a gas engine heat pump, an air-conditioning apparatus for railways, and an air-conditioning apparatus for automobiles.

The air-conditioning apparatus for automobiles is preferably air-conditioning equipment for gasoline vehicles, air-conditioning equipment for hybrid automobiles, air-conditioning equipment for electric automobiles, or air-conditioning equipment for hydrogen automobiles, more preferably air-conditioning equipment for electric automobiles.

Specific examples of the chilling and freezing equipment include a refrigerated display (a refrigeration showcase, a freezing showcase, or the like), a refrigerator, a freezer, a water cooling equipment, a chilling and freezing unit, a freezing machine for water chilling equipment warehouses, a chiller (chilling unit), a turbo freezing machine, a screw freezing machine, an automatic vending machine, and an ice-making machine.

Specific examples of the heating and hot water equipment include a heat pump hot water machine, a heat pump warm water heater, a heat pump warm air heater, a vapor/hot air generation heat pump, and an exhaust heat recovery heat pump.

The electric power generation system is preferably an electric power generation systems with a Rankine cycle system. Specific examples of the electric power generation systems include a system in which the working medium is heated by, for example, geothermal energy, solar heat, or waste heat in a medium to high temperature range of from about 50°C to 200°C in the evaporator, the working medium formed into vapor in a high-temperature and high-pressure state is adiabatically expanded in an expansion machine, and the work generated by such adiabatic expansion is allowed to drive an electric power generation systems machine, to perform electric power generation.

The heat transport apparatus is preferably a latent heat transport apparatus. Examples of the latent heat transport apparatus include a heat pipe and a two-phase closed-type thermosyphon apparatus, in which latent heat transport is performed by use of a phenomenon of evaporation, boiling, condensation, and the like of the working medium enclosed in the apparatus. The heat pipe is applied to a relatively small cooling apparatus such as a cooling apparatus of a heat generation portion of a semiconductor device or electronic equipment. The two-phase closed-type thermosyphon apparatus does not require any wig and is simple in terms of structure, and therefore is widely utilized for a gas-gas type heat exchanger, promotion of snow melting, freeze proofing, and the like on the load, and the like.

[Heat Cycle Apparatus and Heat Cycle Method]

The heat cycle apparatus of the disclosure includes the working medium of the disclosure, a compressor that compresses vapor of the working medium, a condenser that cools and liquefies vapor of the working medium discharged from the compressor, a decompressor that depressurizes the working medium discharged from the condenser, and an evaporator that heats the working medium discharged from the decompressor.

The heat cycle method of the disclosure is a method including compressing vapor of the working medium of the disclosure, cooling and liquefying vapor of the working medium discharged from the compressor, depressurizing the working medium liquefied, and heating the working medium depressurized.

The heat cycle apparatus to which the working medium of the disclosure is applied may be a heat pump apparatus utilizing heat obtained in the condenser, or may be a freezing cycle apparatus utilizing cold obtained in the evaporator. The heat cycle apparatus of the disclosure may be of direct expansion type or indirect expansion type. Examples of the indirect expansion type include a flattened evaporator type.

The heat cycle includes a series of cycles in which the working medium is (1) compressed in a gas state, (2) cooled with the condenser and thus converted into a high-pressure liquid state, (3) reduced in pressure with an expansion valve as one example of the decompressor, and furthermore (4) gasified at a low temperature in the evaporator, to forcedly take heat by vaporization heat. The compressor can be classified into, for example, turbo (centrifugal), reciprocating, rotary, twin-screw, single-screw, and scroll compressors, in terms of the system of compression of the working medium in a gas state, and can be selected in terms of the heat capacity, the compression ratio, and the size.

Examples of the freezing cycle system to which the heat cycle apparatus of the disclosure is applied are as described above.

The working medium of the disclosure is controlled to have, for example, an evaporation temperature of from -40 to 10°C, and is used in a freezing cycle apparatus.

The evaporator is preferably operated at an evaporation temperature of the working medium, of from -40 to 10°C. The evaporation temperature of the working medium in the evaporator may be automatically controlled.

The heat cycle method to which the working medium is applied preferably involves heating the working medium depressurized, at an evaporation temperature of from -40 to 10°C.

In a case in which the evaporation temperature is 10°C or less, the ejection temperature can be reduced as compared with the ejection temperature of 134a, and reliability of the freezing cycle is enhanced. In this regard, in a case in which the evaporation temperature is -40°C or more, the evaporation pressure is 0.0250 MPa or more, and the load associated with suction of the refrigerant into the compressor is reduced.

From the above viewpoint, the evaporation temperature is more preferably 7°C or less, still more preferably 5°C or less. The evaporation temperature is more preferably -25°C or more, still more preferably -10°C or more.

In particular, the evaporation temperature of the working medium is more preferably controlled from -25 to 10°C, still more preferably controlled from -10 to 10°C.

In the disclosure, the evaporation temperature means the temperature at which the working medium absorbs heat and thus is formed into vapor in the evaporation step in the heat cycle system.

In the disclosure, the condensation temperature means the temperature at which vapor of the working medium releases heat and thus is formed into a liquid in the condensation step in the heat cycle apparatus.

The evaporation temperature can be determined by measuring the temperature(s) of the evaporator inlet and/or the evaporator outlet. The evaporation temperature is constant in the case of a single medium and an azeotropic mixed medium, but is the average temperature of the evaporation start temperature and the evaporation completion temperature in the case of a non-azeotropic medium, and therefore is calculated by "Evaporation temperature = (Evaporation start temperature + Evaporation completion temperature)/2".

The condensation temperature can be determined by measuring the temperature(s) of the condenser inlet and/or the condenser outlet. The condensation temperature is constant in the case of a single medium and an azeotropic mixed medium, but is the average temperature of the condensation start temperature and the condensation completion temperature in the case of a non-azeotropic medium, and therefore is calculated by "Condensation temperature = (Condensation start temperature + Condensation completion temperature)/2".

The evaporation pressure of the working medium is preferably 0.0250 MPa or more, more preferably 0.0550 MPa or more, and still more preferably 0.1013 MPa or more from the viewpoint of a reduction in load associated with suction of the refrigerant into the compressor in the heat cycle apparatus in which the working medium is used.

The ejection temperature of the working medium is preferably equal to or less than the ejection temperature of R134a from the viewpoint of an enhancement in reliability to a constituent member in the heat cycle apparatus in which the working medium is used, and the reduction effect with the ejection temperature of R134a as reference is more preferably 3.00% or more.

Reduction effect (%) of ejection temperature of working medium with ejection temperature of R134a as reference = {(Ejection temperature (°C) of R134a - Ejection temperature (°C) of working medium)/Ejection temperature (°C) of R134a} × 100)

Examples

Hereinafter, the disclosure is more specifically described with reference to Examples, but the disclosure is not limited to the following Examples without departing from the gist thereof. Examples 1 to 14 correspond to Examples, and Examples 15 to 18 correspond to Comparative Examples.

A working medium including HFO-1234ze(E), HCFO-1224yd(Z), and HFC-227ea was prepared so that the compositional ratio (% by mass) shown in Table 1 was achieved.

The evaporation glide, the condensation glide, the coefficient of performance (in the Table, designated as "COP"), the capacity per unit volume (in the Table, designated as "CAP"), the freezing effect (in the Table, designated as "wr"), and the heat of combustion (in the Table, designated as "HOC") of the working medium were measured. The global warming potential (in the Table, designated as "GWP") was calculated.

The measurement methods of the evaporation glide, the condensation glide, COP, CAP, wr, and HOC are as described above. CAP, COP, and wr were each converted into the relative value with the value of R-134a as reference (R-134a = 1.00), and then evaluated. GWP was the value (100 years) in Intergovernmental Panel on Climate Change (IPCC), Fifth assessment report (AR5).

[Table 1]

| | HFO-1234ze(E) (% by mass) | HCFO-1224yd(Z) (% by mass) | HFC-227ea (% by mass) | Evaporation glide (°C) | Condensation glide (°C) | COP | CAP | wr | HOC(MJ/kg) | GWP |
|---|---|---|---|---|---|---|---|---|---|---|
| Example 1 | 66.6 | 24.5 | 8.9 | 4.90 | 4.94 | 1.01 | 0.59 | 0.91 | 8.548 | 299 |
| Example 2 | 71.1 | 20.0 | 8.9 | 4.06 | 4.03 | 1.00 | 0.62 | 0.90 | 8.731 | 299 |
| Example 3 | 76.1 | 15.0 | 8.9 | 3.07 | 3.01 | 1.00 | 0.65 | 0.90 | 8.934 | 299 |
| Example 4 | 81.1 | 10.0 | 8.9 | 2.05 | 1.99 | 1.00 | 0.67 | 0.89 | 9.136 | 299 |
| Example 5 | 86.1 | 5.0 | 8.9 | 1.02 | 0.99 | 0.99 | 0.70 | 0.88 | 9.339 | 299 |
| Example 6 | 71.1 | 24.5 | 4.4 | 4.84 | 4.85 | 1.01 | 0.60 | 0.93 | 8.851 | 148 |
| Example 7 | 75.6 | 20.0 | 4.4 | 4.00 | 3.95 | 1.00 | 0.62 | 0.92 | 9.034 | 148 |
| Example 8 | 80.6 | 15.0 | 4.4 | 3.02 | 2.94 | 1.00 | 0.65 | 0.91 | 9.236 | 148 |
| Example 9 | 85.6 | 10.0 | 4.4 | 2.00 | 1.94 | 1.00 | 0.68 | 0.91 | 9.439 | 148 |
| Example 10 | 90.6 | 5.0 | 4.4 | 0.99 | 0.96 | 1.00 | 0.71 | 0.90 | 9.642 | 148 |
| Example 11 | 79.0 | 18.0 | 3.0 | 3.59 | 3.53 | 1.00 | 0.64 | 0.92 | 9.209 | 101 |
| Example 12 | 82.0 | 15.0 | 3.0 | 3.00 | 2.92 | 1.00 | 0.65 | 0.92 | 9.331 | 101 |
| Example 13 | 87.0 | 10.0 | 3.0 | 1.99 | 1.93 | 1.00 | 0.68 | 0.91 | 9.533 | 101 |
| Example 14 | 89.0 | 8.0 | 3.0 | 1.58 | 1.53 | 1.00 | 0.69 | 0.91 | 9.615 | 101 |
| Example 15 | 70.0 | 15.0 | 15.0 | 3.15 | 3.10 | 1.00 | 0.64 | 0.88 | 8.523 | 503 |
| Example 16 | 65.6 | 30.0 | 4.4 | 5.80 | 5.90 | 1.01 | 0.57 | 0.93 | 8.628 | 148 |
| Example 17 | 60.0 | 30.0 | 10.0 | 5.83 | 6.02 | 1.01 | 0.56 | 0.91 | 8.251 | 336 |
| Example 18 | 60.0 | 25.0 | 15.0 | 5.07 | 5.15 | 1.00 | 0.58 | 0.89 | 8.117 | 503 |

As shown in Table 1, it was found that, in each of Example 1 to Example 14, a temperature glide of 5.0 or less could be achieved and a GWP of 300 or less could be achieved because HFO-1234ze(E), HCFO-1224yd(Z), and HFC-227ea were included, the content of HFC-227ea was 8.9% by mass or less with respect to the total content of HFO-1234ze(E), HCFO-1224yd(Z), and HFC-227ea, and the content of HCFO-1224yd(Z) was 24.5% by mass or less with respect to the above total content.

In this regard, it was found that, in Example 15, the content of HFC-227ea was more than 8.9% by mass and GWP was very high.

It was found that, in Example 16, the content of HCFO-1224yd(Z) was more than 24.5% by mass and the temperature glide was high.

It was found that, in each of Example 17 and Example 18, the content of HFC-227ea was more than 8.9% by mass and the content of HCFO-1224yd(Z) was more than 24.5% by mass, and the temperature glide was high and furthermore GWP was also high.

It was found that, in each of Example 3 to Example 5, Example 8 to Example 10, and Example 12 to Example 14, the content of HCFO-1224yd(Z) was 15.0% by mass or less and the temperature glide tended to be reduced to 3.0 or less.

It was found that, in each of Example 6 to Example 14, the content of HFC-227ea was 4.4% by mass or less and a GWP of 150 or less could be achieved.

Next, a working medium including HFO-1234ze(E), HCFO-1224yd(Z), and HFC-227ea was prepared so that the compositional ratio (% by mass) shown in Table 2 was achieved.

The saturated vapor pressure at the temperature (Te'), with respect to the working medium prepared, was calculated.

In a case in which the working medium is any of a single medium and an azeotropic mixture, the saturated liquid pressure and the saturated vapor pressure at the same temperature are substantially the same.

In this regard, in a case in which the working medium is a non-azeotropic mixture, the saturated liquid pressure and the saturated vapor pressure at the same temperature are different and the saturated vapor pressure is lower in value than the saturated liquid pressure.

Therefore, the evaporation pressure is calculated with the evaporation temperature as the average temperature of the evaporation start temperature and the evaporation completion temperature, and therefore can be calculated by Evaporation temperature = (Evaporation start temperature + Evaporation completion temperature)/2, and the lowest evaporation pressure can be determined by the saturated vapor pressure at the temperature (Te') set and controlled as the evaporation temperature.

[Table 2]

| | HF-O-1234z-e(E) (% by mass) | HCF-O-1224y-d(Z) (% by mass) | HF-C-227-ea (% by mass) | Saturated vapor pressure (MPa) | | | | | | | | | |
|---|---|---|---|---|---|---|---|---|---|---|---|---|---|
| | | | | Te' = 10°C | Te' = 5°C | Te' = 0°C | Te' = -10°C | Te' = -15°C | Te' = -20°C | Te' = -25°C | Te' = -30°C | Te' = -40°C | Te' = -50°C |
| Example 1-1 | 80.6 | 15 | 4.4 | 0.2507 | 0.2091 | 0.1730 | 0.1155 | 0.0930 | 0.0741 | 0.0584 | 0.0454 | 0.0265 | 0.0145 |
| Example 1-2 | 85.6 | 10 | 4.4 | 0.2690 | 0.2250 | 0.1867 | 0.1254 | 0.1014 | 0.0811 | 0.0642 | 0.0502 | 0.0296 | 0.0164 |
| Example 1-3 | 90.6 | 5 | 4.4 | 0.2879 | 0.2415 | 0.2010 | 0.1360 | 0.1103 | 0.0886 | 0.0705 | 0.0554 | 0.0330 | 0.0185 |
| Example 1-4 | 82 | 15 | 3 | 0.2513 | 0.2096 | 0.1735 | 0.1158 | 0.0933 | 0.0743 | 0.0586 | 0.0456 | 0.0266 | 0.0145 |
| Example 1-5 | 87 | 10 | 3 | 0.2695 | 0.2254 | 0.1871 | 0.1257 | 0.1017 | 0.0814 | 0.0644 | 0.0504 | 0.0297 | 0.0164 |
| Example 1-6 | 89 | 8 | 3 | 0.2770 | 0.2320 | 0.1928 | 0.1299 | 0.1052 | 0.0843 | 0.0668 | 0.0524 | 0.0310 | 0.0173 |
| Example 1-7 | 65.6 | 30 | 4.4 | 0.2016 | 0.1668 | 0.1369 | 0.0897 | 0.0715 | 0.0564 | 0.0439 | 0.0338 | 0.0192 | 0.0102 |
| Example 1-8 | 60 | 30 | 10 | 0.1985 | 0.1642 | 0.1347 | 0.0882 | 0.0703 | 0.0554 | 0.0431 | 0.0332 | 0.0188 | 0.0100 |
| Example 1-9 | 60 | 25 | 15 | 0.2112 | 0.1751 | 0.1439 | 0.0947 | 0.0756 | 0.0598 | 0.0467 | 0.0360 | 0.0205 | 0.0110 |

As shown in Table 2, in each of Example 1-1 to Example 1-6, in a case in which Te' was from -40 to 10°C, the saturated vapor pressure estimated as the evaporation pressure was 0.0250 MPa or more, in a case in which Te' was from -25 to 10°C, the saturated vapor pressure was 0.0550 MPa or more, and in a case in which Te' was from -10 to 10°C, the saturated vapor pressure was 0.1013 MPa or more.

In this regard, in each of Example 1-7 to Example 1-9, the content of HCFO-1224yd(Z) was more than 24.5% by mass. In a case in which Te' was -40°C, the saturated vapor pressure estimated as the evaporation pressure was less than 0.0250 MPa, in a case in which Te' was - 25°C, the saturated vapor pressure was less than 0.0550 MPa, and in a case in which Te' was - 10°C, the saturated vapor pressure was less than 0.1013 MPa.

Next, each working medium having a compositional ratio shown below was set.

(Example 2-1)

· HFO-1234ze(E): 82.0% by mass
· HCFO-1224yd(Z): 15.0% by mass
· HFC-227ea: 3.0% by mass

(Example 2-2)

· HFO-1234ze(E): 66.0% by mass
· HCFO-1224yd(Z): 30.0% by mass
· HFC-227ea: 4.0% by mass

The freezing cycle state of the working medium of Example 2-1 in conditions of a condensation temperature, an evaporation temperature, a degree of superheat (SH), a degree of supercooling (SC), and a compressor efficiency shown in Table 3 was calculated based on the theoretical performance calculation of the freezing cycle, thereby determining the ejection temperature.

The freezing cycle state of the working medium of Example 2-2 in conditions of a condensation temperature, an evaporation temperature, a degree of superheat (SH), a degree of supercooling (SC), and a compressor efficiency shown in Table 4 was calculated based on the theoretical performance calculation of the freezing cycle, thereby determining the ejection temperature.

The difference between the ejection temperature of the working medium and the ejection temperature of R134a ("Difference in ejection temperature" in Table 3 and Table 4) was calculated.

Difference between ejection temperature of working medium and ejection temperature of R134a = Ejection temperature (°C) of working medium - Ejection temperature (°C) of R134a

Furthermore, the reduction effect (%) of the ejection temperature ("Reduction effect" in Table 3 and Table 4) of the working medium, with the ejection temperature of R134a as reference, was calculated.

Reduction effect (%) of ejection temperature of working medium with ejection temperature of R134a as reference = {(Ejection temperature (°C) of R134a - Ejection temperature (°C) of working medium)/Ejection temperature (°C) of R134a} × 100)

[Table 3]

| Condensation temperature (°C) | Evaporation temperature (°C) | SH (°C) | SC (°C) | Compressor efficiency | Td (°C) | Difference in ejection temperature (°C) | Reduction effect (%) |
|---|---|---|---|---|---|---|---|
| 40 | 10 | 5 | 0 | 0.7 | 51.88 | -3.52 | 6.35 |
| 40 | 5 | 5 | 0 | 0.7 | 53.14 | -4.36 | 7.58 |
| 40 | -5 | 5 | 0 | 0.7 | 56.08 | -6.22 | 9.98 |
| 40 | -15 | 5 | 0 | 0.7 | 59.72 | -8.18 | 12.05 |
| 40 | -25 | 5 | 0 | 0.7 | 64.23 | -10.27 | 13.79 |

(continued)

| Condensation temperature (°C) | Evaporation temperature (°C) | SH (°C) | SC (°C) | Compressor efficiency | Td (°C) | Difference in ejection temperature (°C) | Reduction effect (%) |
|---|---|---|---|---|---|---|---|
| 40 | -40 | 5 | 0 | 0.7 | 73.07 | -13.73 | 15.82 |
| 30 | -40 | 0 | 0 | 0.7 | 56.86 | -12.14 | 17.59 |
| 30 | -40 | 20 | 0 | 0.7 | 79.4 | -12.2 | 13.32 |
| 30 | -40 | 0 | 0 | 1.0 | 34.57 | -10.43 | 23.18 |
| 30 | -40 | 20 | 0 | 1.0 | 55.32 | -9.98 | 15.28 |
| 30 | 10 | 5 | 0 | 0.7 | 40.7 | -1.8 | 4.24 |
| 40 | 10 | 5 | 0 | 0.7 | 51.88 | -3.52 | 6.35 |
| 50 | 10 | 5 | 0 | 0.7 | 62.68 | -5.12 | 7.55 |
| 60 | 10 | 5 | 0 | 0.7 | 73.21 | -6.59 | 8.26 |
| 65 | 10 | 5 | 0 | 0.7 | 78.41 | -7.39 | 8.61 |
| 70 | 10 | 5 | 0 | 0.7 | 83.58 | -8.02 | 8.76 |
| 35 | 10 | 0 | 0 | 0.7 | 41.29 | -2.61 | 5.95 |
| 35 | 10 | 5 | 0 | 0.7 | 46.35 | -2.65 | 5.41 |
| 35 | 10 | 10 | 0 | 0.7 | 51.42 | -2.68 | 4.95 |
| 35 | 10 | 0 | 0 | 1.0 | 36.49 | -1.11 | 2.95 |
| 35 | 10 | 10 | 0 | 1.0 | 44.8 | -2.5 | 5.29 |

[Table 4]

| Condensation temperature (°C) | Evaporation temperature (°C) | SH (°C) | SC (°C) | Compressor efficiency | Td (°C) | Difference in ejection temperature (°C) | Reduction effect (%) |
|---|---|---|---|---|---|---|---|
| 40 | 10 | 5 | 0 | 0.7 | 53.51 | -1.89 | 3.41 |
| 40 | 5 | 5 | 0 | 0.7 | 54.83 | -2.67 | 4.64 |
| 40 | -5 | 5 | 0 | 0.7 | 57.95 | -4.35 | 6.98 |
| 40 | -15 | 5 | 0 | 0.7 | 61.85 | -6.05 | 8.91 |
| 40 | -25 | 5 | 0 | 0.7 | 66.7 | -7.8 | 10.47 |
| 40 | -40 | 5 | 0 | 0.7 | 76.24 | -10.56 | 12.17 |
| 30 | -40 | 0 | 0 | 0.7 | 59.95 | -9.05 | 13.12 |
| 30 | -40 | 20 | 0 | 0.7 | 82.48 | -9.12 | 9.96 |
| 30 | -40 | 0 | 0 | 1.0 | 36.71 | -8.29 | 18.42 |
| 30 | -40 | 20 | 0 | 1.0 | 57.52 | -7.78 | 11.91 |
| 30 | 10 | 5 | 0 | 0.7 | 42.4 | -0.1 | 0.24 |
| 40 | 10 | 5 | 0 | 0.7 | 53.51 | -1.89 | 3.41 |
| 50 | 10 | 5 | 0 | 0.7 | 64.22 | -3.58 | 5.28 |
| 60 | 10 | 5 | 0 | 0.7 | 74.62 | -5.18 | 6.49 |
| 65 | 10 | 5 | 0 | 0.7 | 79.73 | -6.07 | 7.07 |
| 70 | 10 | 5 | 0 | 0.7 | 84.8 | -6.8 | 7.42 |

(continued)

| Condensation temperature (°C) | Evaporation temperature (°C) | SH (°C) | SC (°C) | Compressor efficiency | Td (°C) | Difference in ejection temperature (°C) | Reduction effect (%) |
|---|---|---|---|---|---|---|---|
| 35 | 10 | 0 | 0 | 0.7 | 42.93 | -0.97 | 2.21 |
| 35 | 10 | 5 | 0 | 0.7 | 48.01 | -0.99 | 2.02 |
| 35 | 10 | 10 | 0 | 0.7 | 53.09 | -1.01 | 1.87 |
| 35 | 10 | 0 | 0 | 1.0 | 38 | 0.4 | -1.06 |
| 35 | 10 | 10 | 0 | 1.0 | 46.2 | -1.1 | 2.33 |

It was confirmed from comparison between Table 3 and Table 4 that the working medium of Example 2-1 exerted the reduction effect of the ejection temperature as compared with the working medium of Example 2-2.

The reduction effect of the ejection temperature of the working medium, with the ejection temperature of R134a as reference, was approximately 3.00% or more in the working medium of Example 2-1.

It has been found that an increase in ejection temperature can be suppressed according to the working medium of the disclosure.

In particular, the benefit by the reduction effect of the ejection temperature, received by application of the working medium of the disclosure, is large under an operation condition in which the ejection temperature is higher, in other words, an operation condition in which the compression ratio is higher (specifically, high condensation temperature or low evaporation temperature), and a condition in which the degree of superheat is lower.

The disclosures of Japanese Patent Application No. 2023-012254, filed on January 30, 2023, and Japanese Patent Application No. 2023-070485, filed on April 21, 2023, are herein incorporated by reference in their entirety. All documents, patent applications, and technical standards described herein are herein incorporated by reference, as if each individual document, patent application, and technical standard were specifically and individually indicated to be incorporated by reference.

**Claims**

1. A working medium, comprising (E)-1,3,3,3-tetrafluoropropene, (Z)-1-chloro-2,3,3,3-tetrafluoropropene, and 1,1,1,2,3,3,3-heptafluoropropane, wherein:

    a content of the 1,1,1,2,3,3,3-heptafluoropropane is 8.9% by mass or less with respect to a total content of the (E)-1,3,3,3-tetrafluoropropene, the (Z)-1-chloro-2,3,3,3-tetrafluoropropene, and the 1,1,1,2,3,3,3-heptafluoropropane, and
    a content of the (Z)-1-chloro-2,3,3,3-tetrafluoropropene is 24.5% by mass or less with respect to the total content.

2. The working medium according to claim 1, wherein the total content is 80.0% by mass or more with respect to a total amount of the working medium.

3. The working medium according to claim 1, wherein the content of the 1,1,1,2,3,3,3-heptafluoropropane is 4.4% by mass or less with respect to the total content.

4. The working medium according to claim 1, wherein the content of the (Z)-1-chloro-2,3,3,3-tetrafluoropropene is 15.0% by mass or less with respect to the total content.

5. A composition for a heat cycle system, the composition comprising the working medium according to any one of claim 1 to claim 4, and freezing machine oil.

6. A heat cycle apparatus, comprising:

    the working medium according to any one of claim 1 to claim 4;
    a compressor that compresses vapor of the working medium;
    a condenser that cools and liquefies the vapor of the working medium discharged from the compressor;

a decompressor that depressurizes the working medium discharged from the condenser; and
an evaporator that heats the working medium discharged from the decompressor,
wherein the evaporator is controlled such that an evaporation temperature of the working medium is from -40 to 10°C.

7. The heat cycle apparatus according to claim 6, wherein the evaporator is controlled such that the evaporation temperature of the working medium is from -25 to 10°C.

8. The heat cycle apparatus according to claim 6, wherein the evaporator is controlled such that the evaporation temperature of the working medium is from -10 to 10°C.

9. A heat cycle method, comprising:

compressing vapor of the working medium according to any one of claim 1 to claim 4;
cooling and liquefying the vapor of the working medium;
depressurizing the working medium that has been liquefied; and
heating the working medium that has been depressurized, at an evaporation temperature of from -40 to 10°C.

FIG.1

FIG.2

## INTERNATIONAL SEARCH REPORT

| International application No. |
|---|
| **PCT/JP2024/000660** |

---

**A.    CLASSIFICATION OF SUBJECT MATTER**

*C09K 5/04*(2006.01)i
FI:    C09K5/04 F ZAB; C09K5/04 C; C09K5/04 E

According to International Patent Classification (IPC) or to both national classification and IPC

**B.    FIELDS SEARCHED**

Minimum documentation searched (classification system followed by classification symbols)

C09K5/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2022/084488 A2 (RPL HOLDINGS LIMITED) 28 April 2022 (2022-04-28) claims 1-20 | 1-9 |
| A | JP 2021-152174 A (HONEYWELL INTERNATIONAL, INC.) 30 September 2021 (2021-09-30) claims 1-10 | 1-9 |
| A | WO 2019/078165 A1 (DAIKIN INDUSTRIES, LTD.) 25 April 2019 (2019-04-25) claims 1-13 | 1-9 |
| A | JP 2019-507304 A (HONEYWELL INTERNATIONAL, INC.) 14 March 2019 (2019-03-14) claims 1-13 | 1-9 |
| A | JP 2016-514187 A (HONEYWELL INTERNATIONAL, INC.) 19 May 2016 (2016-05-19) claims 1-15 | 1-9 |

☐ Further documents are listed in the continuation of Box C.          ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **28 February 2024** | **12 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/000660**

| Patent document cited in search report | | | Publication date (day/month/year) | Patent family member(s) | | | Publication date (day/month/year) |
|---|---|---|---|---|---|---|---|
| WO | 2022/084488 | A2 | 28 April 2022 | JP | 2023-546463 | A | |
| | | | | US | 2022/0162489 | A1 | |
| | | | | EP | 4214292 | A1 | |
| | | | | CA | 3196213 | A1 | |
| | | | | AU | 2021363630 | A | |
| | | | | CN | 116601259 | A | |
| | | | | KR | 10-2023-0088913 | A | |
| | | | | IL | 302179 | A | |
| | | | | TW | 202233798 | A | |
| | | | | AR | 123888 | A | |
| JP | 2021-152174 | A | 30 September 2021 | US | 2018/0201817 | A1 | |
| | | | | claims 1-10 | | | |
| | | | | WO | 2018/132757 | A1 | |
| | | | | EP | 3568449 | A1 | |
| | | | | CA | 3043542 | A1 | |
| | | | | KR | 10-2019-0086672 | A | |
| | | | | MX | 2019005547 | A | |
| | | | | CN | 110036087 | A | |
| | | | | BR | 112019009715 | A | |
| WO | 2019/078165 | A1 | 25 April 2019 | US | 2021/0198547 | A1 | |
| | | | | claims 1-13 | | | |
| | | | | JP | 2019-73624 | A | |
| | | | | EP | 3699252 | A1 | |
| | | | | CN | 111194343 | A | |
| JP | 2019-507304 | A | 14 March 2019 | US | 2017/0191702 | A1 | |
| | | | | claims 1-13 | | | |
| | | | | WO | 2017/120539 | A1 | |
| | | | | EP | 3400409 | A1 | |
| | | | | KR | 10-2018-0091950 | A | |
| | | | | CN | 108885030 | A | |
| JP | 2016-514187 | A | 19 May 2016 | WO | 2014/139146 | A1 | |
| | | | | claims 1-15 | | | |
| | | | | US | 2016/0024362 | A1 | |
| | | | | EP | 2970734 | A1 | |
| | | | | KR | 10-2015-0133769 | A | |
| | | | | CN | 105378022 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220162489 A
- US 4249412 B
- JP H10502737 A
- JP 2007511645 A
- JP 2008500437 A
- JP 2008531836 A
- JP 2023012254 A
- JP 2023070485 A